Europäisches Patentamt

European Patent Office

Office européen des brevets

(19)

(11) Publication number: **0 362 411**
A1

## (12) EUROPEAN PATENT APPLICATION
### published in accordance with Art. 158(3) EPC

(21) Application number: 89904222.0

(22) Date of filing: 04.04.89

(86) International application number:
PCT/JP89/00362

(87) International publication number:
WO 89/09796 (19.10.89 89/25)

(51) Int. Cl.5: **C08J 9/06** , **B29C 39/00**

(30) Priority: 05.04.88 JP 83581/88
31.05.88 JP 135224/88
14.06.88 JP 146245/88
28.12.88 JP 335144/88
23.02.89 JP 44512/89

(43) Date of publication of application:
**11.04.90 Bulletin 90/15**

(84) Designated Contracting States:
**BE DE FR GB IT NL SE**

(71) Applicant: **KANEGAFUCHI KAGAKU KOGYO
KABUSHIKI KAISHA
2-4 Nakanoshima 3-chome
Kita-ku Osaka-shi Osaka 530(JP)**

(72) Inventor: **KIMURA, Yoshihiro
5-19-101, Wakayamadai 1-chome
Shimamoto-cho
Mishima-gun Osaka 618(JP)**
Inventor: **INOUE, Toshiaki
5-31, Torikainishi 5-chome Settsu-shi
Osaka 566(JP)**
Inventor: **HIRATSUKA, Yuji
4-14-703, Kamishinjo 2-chome
Higashiyodogawa-ku
Osaka-shi Osaka 533(JP)**

(74) Representative: **TER MEER - MÜLLER -
STEINMEISTER & PARTNER
Mauerkircherstrasse 45
D-8000 München 80(DE)**

(54) **FOAMABLE COMPOSITION, PROCESS FOR ITS PRODUCTION, RIGID FOAM, AND PROCESS FOR ITS PRODUCTION.**

(57) A foamable composition, a process for its production, a rigid foam produced from the foamable composition, and a process for its production are disclosed. The foamable composition comprises (A) a vinyl chloride resin, (B) an inorganic substance containing inorganic fibers of 1 $\mu$m or more in diameter, (C) a solvent which shows a maximum torque of 4 to 25 N.m as a mixture of 100 parts by weight of a vinyl chloride resin of an average degree of polymerization of 2400, 100 parts by weight of the solvent, and 6 parts by weight of dibasic lead stearate when kneaded at a rotation of 30 rpm while raising the temperature using a plastograph, and (D) a decomposable foaming agent. This rigid foam does not require asbestos and is therefore excellent in safety and sanitation of human beings. In addition, it gives less heat and smoke, produces a less amount of poisonous gas, and undergoes less deformation upon combustion, shows excellent dimensional stability in use at high temperatures, that is,

shows excellent heat resistance and, even when forcibly burnt, does not cause harmful ashing which maycause degradation. In addition, it is inexpensive.

DESCRIPTION

FOAMABLE COMPOSITION AND PROCESS FOR PREPARING THE SAME AND RIGID FOAMED ARTICLE AND PROCESS FOR PREPARING THE SAME

## TECHNICAL FIELD

The present invention relates to a foamable composition and a process for preparing such, and to a rigid foamed article and a process for preparing such. More particularly, the present invention relates to a foamable composition which gives a rigid foamed article which generates little heat, little smoke and little noxious gas on burning, is low in its heat deforming ratio on burning, and is excellent in safety and health for the human body as well as in its high dimensional stability and form retentivity when used at high temperatures, that is, heat resistant properties, and a process for preparing such, and the rigid foamed article and a process for preparing such.

## BACKGROUND ART

As foamed articles of polyvinyl chloride containing inorganic materials (hereinafter referred to as PVC) and processes for preparing such, what have been disclosed, for example, in Japanese Examined Patent Publications Nos. 26776/1977 and 7944/1978, and Japanese Unexamined Patent Publications Nos. 264232/1985 and 278543/1986, and the like, are known.

In techniques disclosed in these publications, asbestos fibers have been incorporated into the foam as means to lessen its deforming ratio on burning, to improve its dimensional stability when used at high temperatures, and to increase its mechanical strength. Since the single fibers of asbestos are fine and flexible fibers of which diameter is 0.03 to 0.1 $\mu$m or so, it is relatively easy to uniformly distribute them in cell membranes (thickness of cell membranes is usually 1 to

100 μm or so) of the foam.

In recent years, however, the harmfulness (carcinogenicity) of asbestos fiber to the human body has attracted considerable attention and has been taken up as a social problem, and regulation of its use also has been discussed. It is said that asbestos is harmful to the human body since its fibers are very fine and are easily inhaled and accumulated in pulmonary alveoli.

Therefore, technology to incorporate reinforcing fibers instead of asbestos, into the foam, or such a foamed article has been eagerly awaited. However, no other inorganic fiber which is as fine and flexible as asbestos exists. For example, the diameters of a single fiber of glass, rock wool, and ceramics are 10 to 13 μm, 4 to 6 μm, and 2 to 3 μm, respectively. Since they are thicker and more rigid than single asbestos fibers, they are apt to break through a cell membrane of the foam so that the gas therein which creates the foam may escape. For this reason, it has been thought, so far, that it is technically difficult to prepare a good foamed article by incorporating a significant amount of the inorganic fibers, other than asbestos, into it, and that it is further difficult to secure by such a means a good foamed article which would satisfy requirements of low cost, high thermal insulating property and light weight.

Meanwhile, as a foamed article which has excellent characteristics in that it does not have undesirable shrinkage even in case of exposure to high temperatures due to, for instance, fire and the like, and generates little heat and little smoke compared to the amount of heat and smoke inherent in such thermoplastic resins such as chlorinated vinyl chloride resin which have high chlorine contents, the present inventors have developed a foamed article of chlorinated vinyl chloride resin containing inorganic material which has a dimensional retention of at least 70 % when heated for 1 hour at 200°C and an expansion ratio of at least 5 times (Japanese Unexamined Patent Publication No.

264645/1988).

However, the above-mentioned foamed article, based on the above-mentioned chlorinated vinyl chloride resin, has a tendency that, when it is forcedly burned (for example, in the surface test of JIS A1321), its resin parts are turned to ash, making its form retention difficult, and it is supposed to cause generation of penetrating canals and collapse of its structure. So, the inventors have already created a method for resolving such problems in which phosphoric ester is incorporated. However, since efforts to prevent the material from turning to ash, for the purpose of surely preventing the collapse of the foam, are naturally limited under the further severe conditions of forced combustion (for example, of the model box test according to Notice No. 1231 of the Ministry of Construction (Japan)), where an actual fire in a closed chamber is simulated with measuring a fire extendibility and a fire spreading speed, it is difficult to obtain a foamed article which satisfies the model box test measuring quasi-noncombustibility by using a chlorinated vinyl chloride resin. In addition, because chlorinated vinyl chloride resin itself and phosphoric ester are relatively expensive raw materials, foamed articles made therefrom are necessarily expensive. So, an economically advantageous foam is expected.

Then, in consideration of the above prior art, the inventors have repeated eager studies. As a result, they have for the first time found that when both an inorganic substance containing inorganic fibers which are excellent in safety and health for the human body and a specific solvent are used without using asbestos, surprisingly, a novel, very good foamed article having high expansion ratio, in which the inorganic fibers do not break through the cell membrane of the foam and the blowing gas does not leak, which generates little heat, little smoke, little noxious gas, is small in deforming ratio on burning and is excellent in its dimensional stability when used at high temperatures, that is, in heat resistance, in addition, which generates no harmful ashing causing collapse of the foam even when subjected to forced combustion, and is low in cost. Thus, the present invention has been completed.

Furthermore, the present inventors have made it possible to secure a foamed article which could meet requirements of quasi-noncombustibility or noncombustibility regulated in the Building Standard Law in Japan, by selecting preferable conditions.

DISCLOSURE OF THE INVENTION

First, the present invention relates to a foamable composition which comprises (A) PVC, (B) an inorganic substance containing inorganic fibers of not less than 1 µm diameter, (C) a solvent which, when combined with 100 parts by weight of PVC of average polymerization degree of 2400, and 6 parts by weight of dibasic lead stearate per 100 parts by weight of solvent, and kneaded using a plastograph at 30 rpm while raising the temperature, causes the mixer to show a torque of 4 to 25 N·m, and (D) a decomposition-type blowing agent.

Secondly, the present invention relates to a process for preparing a foamable composition, characterized by kneading (A) PVC, (B) an inorganic substance containing inorganic fibers of not less than 1 µm diameter, (C) a solvent which, when combined with 100 parts by weight of PVC of average polymerization degree of 2400, and 6 parts by weight of dibasic lead stearate per 100 parts by weight of solvent, and kneaded using a plastograph at 30 rpm while raising the temperature, causes the mixer to show a torque of 4 to 25 N·m, and (D) a decomposition-type blowing agent, at a temperature not less than that at which the PVC and the solvent become compatible with each other which is not more than the boiling point of the solvent.

Thirdly, the present invention relates to a process for preparing a foamable composition, characterized by kneading (A) PVC, (B) an inorganic substance containing inorganic fibers of not less than 1 μm diameter and (C) a solvent which, when combined with 100 parts by weight of PVC of average polymerization degree of 2400, and 6 parts by weight of dibasic lead stearate per 100 parts by weight of solvent, and kneaded using a plastograph at 30 rpm while raising the temperature, causes the mixer to show a torque of 4 to 25 N·m at a temperature not less than that at which the PVC and the solvent become compatible with each other, and not more than the boiling point of the solvent; adding (D) a decomposition-type blowing agent to the mixture at a temperature lower than the decomposing temperature of the decomposition-type blowing agent; and further kneading the resulting mixture.

Fourthly, the present invention relates to a rigid foamed article of expansion ratio of not less than 50 times which is prepared by expanding a foamable composition which is composed of (A) PVC, (B) an inorganic substance containing inorganic fibers of not less than 1 μm diameter, (C) a solvent which, when combined with 100 parts by weight of PVC of average polymerization degree of 2400, and 6 parts by weight of dibasic lead stearate per 100 parts by weight of solvent, and kneaded using a plastograph at 30 rpm while raising the temperature, causes the mixer to show a torque of 4 to 25 N·m, and (D) a decomposition-type blowing agent.

Fifthly, the present invention relates to a process for preparing a rigid foamed article, characterized by kneading (A) PVC, (B) an inorganic substance containing inorganic fibers of not less than 1 μm diameter, (C) a solvent which, when combined with 100 parts by weight of PVC of average polymerization degree of 2400, and 6 parts by weight of dibasic lead stearate per 100 parts by weight of solvent, and kneaded using a plastograph at 30 rpm while raising the temperature, causes the mixer to show a torque of 4 to 25 N·m, and (D) a decomposition-type blowing agent; introducing the resulting foamable composition into a closable mold; heating it under pressure to decompose the decomposition-type blowing agent; and then expanding the composition within the mold at the same time opening the mold at an appropriate expansion temperature.

## BEST MODE FOR CARRYING OUT THE INVENTION

The present invention has been accomplished based on the fact that inorganic fibers are uniformly dispersed in the foam and so problems of prior art mentioned above are resolved when (A) PVC, (B) an inorganic substance containing inorganic fibers of not less than 1 μm diameter (hereinafter sometimes referred to merely as "inorganic fibers"), (C) a specific solvent, and (D) a decomposition-type blowing agent are mixed together, and the mixture is kneaded at a temperature higher than that at which the solvent becomes compatible with the PVC.

A well foamed PVC article containing inorganic fibers in which asbestos is not contained, further, a quasi-noncombustive and noncombustive PVC foamed article have for the first time been able to be produced by the present invention, and it has been realized by skillfully taking advantage of the solubility (compatibility) between PVC and a solvent.

Conventionally, regardless of the type of PVC, dispersion PVC or suspension PVC, it had been impossible to obtain a foam containing thicker fibers such as rock wool and glass fibers. To the contrary, the present invention for the first time made it possible to obtain a foam by using a specific solvent, compatible with PVC, regardless of the type of PVC. For example, use of a suspension type of PVC had previously been restricted since it had usually been difficult to microdisperse with the mere use of a kneader because of the large sizes of the polymer particles. According to the present invention, however, the use of a specific solvent, compatible with PVC, disentangles domain particles and microdomain particles in suspension-type PVC particles to a molecular order, and further forms a uniform gel phase from PVC and the solvent, so that the viscosity of the foamable composition rises on kneading and the shear force acting on a mass of inorganic fibers thus increases, the mass of inorganic fibers are disentangled. Then, the fibers become uniformly dispersed in the foamable composition, and the uniform gel phase envelopes and enwraps the inorganic fibers. Consequently, it becomes possible to uniformly distribute inorganic fibers in cell membranes of the foam. As a result, it becomes possible to uniformly disperse the inorganic fibers in cell membranes of the foam, the inorganic fibers seldom break through the cell membranes, and the percentage of closed cells in the foam increases, wherefor only a small amount of the blowing gas leak out. In addition, the formation of a homogeneous gel phase makes the proportion of the resin parts larger compared with the case of the absence of the solvent, and the resin parts uniformly, entirely envelope and enwrap the inorganic fibers at the time of mixing or foaming so that a good foam can be formed.

In addition, by wetting the surface of the inorganic fiber with the solvent, air and water attached on the surface of the inorganic fiber migrate into the solvent, or are removed. This makes the contact between the surface of the inorganic fiber and the homogeneous gel phase stronger.

Furthermore, although the volume of the resin part decreases with evaporation of the solvent after blowing, its proportion relative to the inorganic fibers does not change. Thus, the inorganic fibers remain completely covered with the PVC film.

According to the present invention, the use of a specific solvent which is compatible with PVC, disentangles domain particles and microdomain particles in PVC particles to a molecular order, and makes granularity and porosity of PVC particles disappear. For this reason, the blowing gas retentivity of cell membranes of the foam is improved so that it becomes possible to prepare a good foamed article.

It is supposed that the solvent serves to dissolve the blowing gas, such as nitrogen or carbon dioxide, which generates due to the decomposition of the decomposition-type blowing agent in the closed mold, and to firmly hold such a blowing gas while the mold is closed.

Furthermore, it is supposed that, since the composition is blown in the presence of the specific solvent compatible with PVC, the viscoelasticity of the system is lessened, and the residual stress or strain caused by the elongation of the cell membrane on expanding is reduced.

It is also supposed that the stress or strain is rapidly relaxed while the solvent is volatilized and removed after expanding.

As a result of the various possible effects mentioned above, the advantages of the reduction in the amount of deformation of the foam on burning, or the reduction in the amount of change in dimension of the foam when used at high temperatures, are secured.

As a PVC referred to in this specification, a homopolymer of vinyl chloride is most desirable in view of its combustion properties, such as ashing. However, copolymers containing at least 50 % by weight of vinyl chloride or a mixture of polyvinyl chloride with at least one type of blending resin compatible with PVC, such as chlorinated polyvinyl chloride, chlorinated polyethylene and ethylene-vinyl acetate copolymer may be within the scope of this invention. The content of such a blending resin in the mixture is desirably small; meaning at most 50 % by weight, preferably at most 30 % by weight, and further preferably at most 20 % by weight. The typical example of PVC used in the present invention is a homopolymer of vinyl chloride. Such PVC is not specially restricted in its type or its method of preparation in the present invention.  However, among such PVC, a suspension polymerized PVC is preferable in terms of its low cost.  When the polymerization degree of PVC is less than 1500, there is a tendency that cell membranes on expanding is easy to break, and the expansion ratio is easy to decrease due to escape of the blowing gas.  When the polymerization degree of PVC is more than 5000, there is a tendency that it becomes difficult to prepare it.

Herein the suspension polymerized PVC means porous PVC of particle size of 100 to 300 µm composed of aggregates of primary particles of particle size of about 1 µm, which is prepared by a suspension polymerization process.  Such a primary particle is composed of domain particles of a particle size of about 0.1 µm.  Such a domain particle, in turn, is composed of microdomain particles of a particle size of about 0.01 µm.  Besides suspension PVC, paste PVC also can be used.  Here, paste PVC is generally spherical, fine particles of at most several µm particle size and is prepared by an emulsion or microsuspension polymerization process; the above fine particle is composed of many fine particles of further small particle size.

As an inorganic substance used in the present invention, ones containing inorganic fibers of not less than 1 µm in diameter are used.

As the above-mentioned inorganic fiber of not less than 1 µm diameter, for instance, rock wool, glass fiber, ceramic fiber, alumina fiber, carbon fiber, quartz fiber, boron fiber, various metal fibers, various whiskers, and the like are exemplified.  Each of these fibers is used singly or two or more of them can be used in combination.  Among them, however, rock wool is most preferable in terms of its easy expansion moldability, various properties of foam made therefrom, cost and the like.

As for the length of the inorganic fiber used in the present invention, the longer fibers exhibit better foam-filling effect, and the shorter fibers exhibit better filling workability. Accordingly, it is desirable that the length is 10 μm to 50 mm, preferably 20 μm to 20 mm, and further preferably 100 μm to 10 mm.

The amount of the inorganic fiber is adjusted appropriately in accordance with the purpose of use of the foamed article which is a final product.

It is desirable that the amount of the inorganic fiber of at least 1 μm diameter represented by rock wool used for the purpose of preventing collapse of the foam, or the like, is usually at least 2 parts (parts by weight, hereinafter referred to as the same), preferably at least 5 parts, and further preferably at least 10 parts per 100 parts of PVC. The purpose of incorporating such inorganic fibers into the foam is mainly to maintain the form of the foam even when it is forcedly burned. However, too much amount of the inorganic fiber makes the preparation of the foam difficult, and increases the cost of preparation. Therefore, it is desirable that the amount is at most 200 parts, preferably at most 100 parts, and further preferably at most 50 parts per 100 parts of PVC.

As an inorganic substance other than the above-mentioned inorganic fiber of at least 1 μm diameter used in the present invention, inorganic particles are used.

As such inorganic particles, those of average particle size of about 0.01 to 300 μm are used. The use of inorganic particles of larger specific surface area usually shows advantages, in that the amount of deformation of the foam on burning is smaller, and the dimensional stability of the foam when used at high temperatures is larger. The inorganic particles are not specially limited in their type, but talc, carbonates such as calcium carbonate, metal hydroxides, inorganic hydrous compounds, and the like are preferable, and hollow materials such as shirasu balloon can also be used.

As the above-mentioned metal hydroxide, for example, aluminum hydroxide (dehydrating point 300°C), magnesium hydroxide (dehydrating point 350°C), calcium hydroxide (dehydrating point 580°C), tin hydroxide (dehydrating point 160°C) and the like are useful. Among them, however, aluminum and magnesium hydroxides are desirable because their dehydrating points are not so low that the dehydrating reaction starts during the process of preparing the foam, and yet not so high that the dehydrating reaction may start only after substantial burning of the foam.

The above-mentioned metal hydroxides, represented by aluminum and magnesium hydroxides, are dehydrated and decomposed when the foam is heated to 200° to 400°C, and exhibit the effect that, by an endothermic at that time, the metal hydroxides lessen the amount of heat generated by burning the foam to repress the rise of temperature of the foam and to reduce the amount of deformation of the foam. Among them, aluminum hydroxide is particularly preferable. As for the particle size of the above-mentioned metal hydroxide, smaller particle sizes provide better filling effect. However, considering a balance with cost, ones of average particle size of 0.2 to 60 μm are usually used.

As inorganic hydrated compounds used in the present invention, there can be cited, for example, calcium sulfate dihydrate (dehydrating point 128°C), aluminum oxide monohydrate (dehydrating point 360°C), aluminum trihydrate (dehydrating point 150°C), 3.5 hydrate of zinc borate ($2ZnO \cdot 3B_2O_3 \cdot 3.5H_2O$, dehydrating point 260°C), and the like. Among them, 3.5 hydrate of zinc borate and aluminum oxide monohydrate are preferable because their dehydrating points are not so low that the dehydrating reaction may start during the process of preparing the foam. Generally, smaller size particles exhibit better filling effects. However, in consideration of a balance with cost, ones of average particle size of 0.5 to 50 μm are usually used.

The amount of the above-mentioned inorganic particles is adjusted appropriately in accordance with the expansion workability and the using purpose of the foamed article which is a final product. The amount of the inorganic particles is at least 198 parts, preferably at least 300 parts, further preferably at least 400 parts.

When the amount of the inorganic substance is less than 200 parts, there is a tendency to lessen the effect on combustion properties. On the contrary, the use of higher amounts improves fire resistance, but, such larger amounts have a tendency to cause drawbacks including increases in the thermal conductivity, brittleness, increase of weight of the foamed article, and the like. Therefore, to meet the quasi-noncombustive standard, it is desirable that the amount is at most 1000 parts, preferably at most 800 parts, and further preferably at most 700 parts per 100 parts of PVC. For the purpose of meeting the quasi-noncombustive standard, it is desirable to use a metal hydroxide such as alminum hydroxide in an amount of 80 to 300 parts, preferably 150 to 300 parts per 100 parts of PVC in order to improve the endothermic property of the foam.

On the other hand, for the purpose of making a rigid foamed article of the present invention as a noncombustive material used as, for example, an insulating material or the like, specified in Notice No. 1231 by the Ministry of Construction (Japan), it is desirable to use metal hydroxides, represented by aluminum hydroxide which has a large endothermic effect, as an inorganic substance in an amount of at least 900 parts, and preferably at least 1000 parts per 100 parts of PVC. In addition, when taking account of safety such as the prevention of crack, it is desirable to use an inorganic fiber in an amount of 2 to 10 parts per 100 parts of PVC.

As for the amount of the inorganic substance, as mentioned above, the higher amount improves the fire resistance of the foam, but such higher amount has a tendency to cause drawbacks such as increases in the thermal conductivity, brittleness and an increase of weight of the foam. Therefore, when aiming at meeting the noncombustive standard, it is desirable that the amount of the inorganic substance containing metal hydroxides represented by aluminum hydroxide, is at most 2000 parts, preferably at most 1500 parts, and further preferably at most 1100 parts per 100 parts of PVC.

In order to obtain a foam which has a good cell size and meets the quasi-noncombustive or noncombustive standard, it is desirable that the inorganic substance contains a nucleating agent.

As representative examples of the above-mentioned nucleating agent, for example, talc which is used most generally, and the like can be cited. Among the nucleating agents, talc exhibits excellent effect of controlling the cell size in a foam. As for the particle size of the nucleating agent, the smaller particle size usually has a tendency to make the cell size of the foam smaller, and so the particle size of the nucleating agent is selected in accordance with the desired cell size, however, it is preferable that the average particle size of the nucleating agent is usually about 1 to 50 μm.

It is desirable that the amount of the above-mentioned nucleating agent is usually 30 to 200 parts, and preferably 50 to 150 parts per 100 parts of PVC.

Since the rigid foamed article of the present invention contains a large amount of an inorganic substance, an inappropriate preparative process may possibly cause decrease in its impact resistance or an increase in its water absorption property or water vapor permeability.

Therefore, in case that these properties are lowered, it is effective that the particle size (specific surface area) and the amount of the inorganic substance are appropriately controlled.

In other words, it is possible to obtain an excellent foamed article having both a high impact resistance and a high water resistance, without any decrease in its high thermal resistance, by appropriately controlling both the degree of contact of the inorganic substances with each other in the cell membrane of the foam, and the area of the interface of the inorganic substance and the PVC. The thermal resistance is maintained at a high level by keeping the degree of contact of the inorganic substance with each other higher than a certain level. Both the impact resistance and the water resistance are improved by reducing the area of interface of PVC and the inorganic substance.

These properties can be concretely specified using the total surface area of the inorganic substance per unit amount of PVC as a measure. Usually, in order to improve the impact resistance and to reduce the water absorption property and the water vapor permeability, it is desirable that the total surface area of the inorganic substance per one gram of PVC is adjusted to be to 3 to 30 $m^2$, preferably 5 to 25 $m^2$, and further preferably 8 to 18 $m^2$.

Even when the amount of the inorganic substance used is relatively small, it is possible to increase the total surface area of the inorganic substance per one gram of PVC by using an inorganic substance having a small particle size, that is, a large specific surface area. For example, even when the amount of the inorganic substance is about 200 parts, the total surface area per one gram of PVC can be adjusted to be about 8 $m^2$.

However, since inorganic substances having small particle sizes are usually expensive, the type and amount of the inorganic substance to be actually used should be selected with comparing the decrease of thermal conductivity due to the reduction of the amount of the inorganic substance used, with merits including improvement in brittleness and light weight of the product.

As a solvent used in the present invention, a material which, when put up in a mixture composed of 100 parts of PVC of average polymerization degree of 2400, 100 parts of the solvent and 6 parts of dibasic lead stearate, and the mixture is kneaded using a plastograph at 30 rpm while raising the temperature from a room temperature, exhibits a maximum torque of 4 to 25 N·m, is used.

As the method for determinating the criterion of compatibility between PVC and a solvent, various methods such as a method of observing the process of gelation of a mixture kneaded by a plastograph and a method of heating the solvent in which PVC is suspended in a transparent vessel and measuring the temperature at which the PVC dissolves and turns clear, are considered. It is considered that a dynamic method is more suitable than a static method because it is more closely similar to the actual preparing process to evaluate under dynamic conditions which is similar to the condition in which the kneading is actually done using a kneader. For this reason, the evaluating method using a plastograph, which is commonly used by a person skilled in the art, is employed in the present invention.

The reason for using a mixture of 100 parts of PVC of average polymerization degree of 2400, 100 parts of the solvent, and 6 parts of dibasic lead stearate is because the operability of the plastograph is taken account of, and because this represents a condition similar to that in which a person skilled in this art usually use to investigate the PVC-plasticizability of a plasticizer. As the above-mentioned plastograph, PLASTI-CORDER® made by Brabender OHG DUISBURG is used. The reason for setting 30 rpm as the revolving speed is because it is a revolving speed which is generally adopted when investigating the process of kneading and gelation of PVC compositions using the above-mentioned plastograph.

The surface of a PVC particle melts on heating, and PVC particles begin to stick with each other. Thus, the torque value when the plastograph is used gradually increases. At a temperature at which the maximum torque value is reached, almost all particles finish sticking to each other, however, internal portions of the particles still remain stiff and do not melt.

Since a solvent which is compatible with PVC easily migrates into the internal portions of PVC particles, and so the amount of the solvent present at the surface section of PVC particles decreases, the friction between particles adhered to each other increases, and the torque value also increases. Thus, it is considered that a solvent which has a larger maximum torque value exhibits a higher compatibility with PVC.

Therefore, it is desirable that the maximum torque value which is exhibited by a solvent is high. However, since too high a maximum torque value causes the temperature necessary to cause expansion of the PVC to reduce, whereby necessitating cooling the foam to a considerable low temperature during expanding, and causing a loss of energy, it is desirable that the maximum torque value is at most 25 N·m, preferably at most 20 N·m, and further preferably at most 15 N·m.

On the other hand, the lower maximum torque value which is exhibited by a solvent results in a lower expansion ratio of the foam. Therefore, in order to give a foam having an expansion ratio of at least 50 times, it is desirable that the maximum torque value is at least 4 N·m.

Generally, there is a tendency that the lower the temperature at which a solvent exhibits a maximum torque value (hereinafter referred to as "maximum torque temperature") is, the lower the expanding temperature becomes. So when the above maximum torque temperature is too low, the expanding temperature comes to be so low that it necessitates carrrying out the expanding process with cooling, e.g., at not higher than 0°C, which is difficult to be industrially practiced.

On the contrary, there is a tendency that the higher the maximum torque temperature becomes, the higher the expanding temperatures becomes. When the expanding temperature is too high, there is a tendency that there occurs the energy loss and that working condition deteriorates, and as a result, it is difficult to industrially produce a foamed article.

Taking account of such matters, it is desirable that the maximum torque temperature is 40° to 150°C, preferably 50° to 140°C, and further preferably 60° to 130°C.

As examples of a solvent which satisfies the above-mentioned conditions, there can be cited, for example, mixed solvents of an aromatic solvent and ketones, mixed solvents of esters and ketones, mixed solvents of cellosolves and ketones, and the like. Examples of those are, for example, a mixed solvent of which toluene/cyclohexanone is 3/1 to 15/1 (weight ratio, hereinafter referred to as the same), a mixed solvent of which toluene/acetone is 2/1 to 15/1, a mixed solvent of which toluene/diisobutylketone is 5/1, a mixed solvent of which toluene/methylethylketone is 5/1, a mixed solvent of which toluene/cyclopentanone is 5/1, a mixed solvent of which toluene/methylisobutylketone is 5/1, a mixed solvent of which toluene/mesityl oxide is 5/1, a mixed solvent of which toluene/dimethylformamide is 9/1, a mixed solvent of which n-butyl acetate/cyclohexanone is 5/1, and the like. However, it is needless to say that these examples of the solvent are only examples, and that other solvents also can be used provided that they satisfy the above-mentioned conditions.

It is desirable that the boiling point of the solvent (when the mixed solvent is used, the boiling point of it) specified in the present invention is 0° to 250°C, preferably 10° to 210°C, and further preferably 20° to 190°C. A solvent having too low a boiling point possibly evaporates away during kneading the foamable composition, and a solvent having too high a boiling point is difficult to evaporate away from the foam after expansion molding.

Solvents used in the present invention do not include a polymerizable liquid which is generally referred to as monomer, such as styrene monomer or acrylonitrile monomer, because when such a monomer polymerizes during the process for preparing the foam and the obtained polymer remains in the final foamed article, the polymer largely makes its combustive properties poorer.

It is more preferable that the amount of the solvent contained in the foamable composition is larger, in order that the degree of incorporation of the inorganic substance into the homogeneous gel phase of PVC and the solvent is improved to contain a large amount of the inorganic substance in the foamed article, that the granularity and porosity of PVC is disappeared to improve the blowing gas retentivity of the foam, and that the residual stress or strain is lessened. However, too large amount of the solvent may sometimes reduce the expanding temperature down to a level which is unsuitable for an actual process for preparing. Accordingly, the amount of the solvent used is also dependent on the average polymerization degree of PVC, the degree of the compatibility between the solvent and PVC, the type and the amount of the inorganic substance used, and the like. For the above-mentioned reasons, however, it is desirable that the amount of solvent is 250 to 3000 parts, preferably 350 to 2000 parts, further preferably 450 to 1000 parts per 100 parts of PVC.

As the decomposition-type blowing agent used in the present invention, ones that are decomposed by heat and generate nitrogen gas such as azodicarbonamide, azobisisobutyronitrile, diazoaminobenzene, dinitrosopentamethylenetetramine (hereinafter referred to as "DPT"), p-toluenesulfonylhydrazide can be cited. The reason for appropriately using such a decomposition-type, nitrogen gas-generating blowing agent in the present invention is because nitrogen gas does not readily permeate away out of the foam during the process of evaporating away the solvent after expansion. Among these decomposition-type blowing agents, DPT is particularly appropriately used because of its low cost, and because it can be used alone in the present invention. The reason why DPT can be used alone in the present invention is not still clear. It is supposed in the present invention in which a large amount of the solvent is used in order to obtain a good foamed article, however, that its function as a blowing agent is fully exhibited by the enough contact between DPT and a blowing aid and the like such that a good solvent for PVC exhibits a good solubility for DPT and/or the blowing aid in many cases.

Japanese Examined Patent Publication No. 52115/1986 requires the use of azo-type or sulfur-type radical-generating agents as an essential condition, and specifies that, in the absence of such a radical-generating agent, the composition does not expand. According to the present invention, however, even when no radical-generating agent is used, for example, even when DPT which does not generate any radical, is used as a blowing agent, it is possible to produce a good blown product. Thus, it is clear that the present invention is based on quite a different blowing mechanism.

DPT has a large amount of heat of decomposition. At a molding temperature such as a press temperature (for example, 175°C or so) sufficient to decompose DPT and blow in conventional known methods, the use of DPT alone is apt to cause decomposition of PVC due to a large amount of heat of decomposition. On the contrary, in the present invention, the use of a good solvent for PVC makes the domain structure of PVC disappear at a low temperature, and makes it possible to exhibit retentivity of the blowing gas. By this means the present invention makes it possible to press the composition at a low temperature of 130° to 150°C to prevent the thermal decomposition of PVC. The cost of an industrial foamed article can be largely reduced if scraps which are yielded, for example, on cutting a foam into a prescribed size of foamed articles and the like, can be reused (recycled) at the next expansion molding. In the present invention, in case of using DPT, since the expansion molding at a low temperature can be carried out, it becomes possible to successfully prevent troubles concerning the thermal decomposition of PVC due to the heat history at the expansion molding and due to the heat history at the recycling PVC composition. It is especially noted that because of this, recycling the previously foamed PVC material is made possible for the first time.

In the present invention, combined use of the above DPT with a zinc-containing compound is desirable since it largely reduces the heat generated from the rigid foam therefrom on burning.

The mechanism wherein the zinc compound reduces the heat generated from the rigid foam in which DPT is used is not still clear. However, it is supposed that the residue of DPT after the heat decomposition is carried out to generate a blowing gas, which is supposed to promote the deterioration of PVC, acts upon the zinc compound.

The above-mentioned zinc-containing compound is a zinc-containing inorganic compound and/or a zinc-containing organic compound. The examples are, for instance, zinc borate, basic zinc carbonate, zinc sulfide, zinc phosphate, and the like. Examples of an organic zinc compound are, for instance, zinc stearate, zinc octanoate, and the like. Such a zinc-containing compound is used singly or in combination with another. The amount of the zinc-containing compound is 5 to 95 parts per 100 parts of PVC. The amount of the inorganic zinc compound is preferably 5 to 70 parts, and further preferably 10 to 50 parts per 100 parts of PVC; the amount of the organic zinc compound is preferably 5 to 20 parts per 100 parts of PVC. The inorganic zinc compound is preferable to the organic zinc compound because it generates a smaller amount of heat on burning. When the amount of the zinc-containing compound is less than the above-mentioned lower limit, the reducing of the heat generated on burning comes to be ineffective. When the amount exceeds the above-mentioned upper limit, there is a tendency to make it impossible to realize such low cost of articles which can be widespreadly used in the market.

The amount of the above-mentioned decomposition-type blowing agent depends on the desired expansion ratio, types of the blowing agent, types and amounts of inorganic fiber, inorganic particle and solvent, and the like. However, the amount is usually 5 to 100 parts, preferably 10 to 50 parts, and further preferably 20 to 50 parts per 100 parts of PVC.

When the amount of the above-mentioned decomposition type blowing agent is less than 5 parts, there is a possibility that the desired expansion ratio comes to be insufficient, and when the amount is more than 100 parts, there is a tendency to easily result in breakage of cell membranes on expanding.

The above-mentioned blowing agent can be used in combination with a blowing aid, for example, a urea-type blowing aid, and the like, if necessary.

As a stabilizer used in the present invention, any type of stabilizer is useful provided that it has a capacity to prevent decomposition and deterioration of PVC. Examples of such stabilizers are, for instance, dibasic lead stearate, dibasic lead phosphite, tribasic lead sulfate, zinc stearate, calcium stearate, and the like. Such a stabilizer is not necessarily used in applications where heat resistant properties are not required. However, the blending amount of such a stabilizer used in usual applications is preferably 2 to 20 parts, and further preferably 3 to 7 parts per 100 parts of PVC. The amounts of more than 20 parts do not seem to improve the stabilizing effect so much, and might be disadvantageous in cost.

It is needless to say that, in the present invention, ingredients which are usually used as additives for plastics can be appropriately employed if necessary, including pigments such as titanium dioxide and ultramarine; antistatic agents such as tertiary amines and alkyl sulfonates, and the like.

An example concerning the process for preparing a foamable composition and the process for preparing a rigid foamed article therefrom, according to the present invention, is described as follows.

First, a prescribed amount of raw materials is fed into a kneader, such as a twin kneader, wherein the temperature is adjustable and the raw material can be kneaded by a high shear force. The kneading operation is carried out at a temperature of at least the temperature whereat PVC and the solvent exhibit compatibility, but of at most the boiling point of the solvent, until the inorganic fibers are well disentangled and each raw material is uniformly dispersed. If necessary, the temperature of the composition is once lowered, and then the blowing agent is further added at a temperature of at most the decomposing point of the blowing agent, and the kneading operation is continued.

In this specification, the temperature at which compatibility is exhibited means the temperature at which, when a mixture which is composed of PVC, the inorganic substance, solvent, and stabilizer is kneaded using a plastograph at an arbitrary kneading speed while raising the temperature from room temperature, the mixture exhibits the maximum torque. This temperature is different according to the type and amount of each raw material, the type of the kneading machine, the kneading conditions, and the like.

The reason for kneading at a temperature of at least the temperature at which PVC and the solvent exhibit compatibility, but of at most the boiling point of the solvent is because, when kneading at a temperature lower than the temperature at which PVC and the solvent exhibit compatibility, the basic principle of the present invention that, during kneading the foamable composition, the solvent disentangles PVC to a molecular order to form a homogeneous gel phase of PVC and the solvent is not satisfied, and because, when kneading at a temperature higher than the boiling point of the solvent, the solvent largely evaporates away during kneading the foamable composition.

When a decomposition-type blowing agent which begins to decompose at a temperature whereat PVC and the solvent exhibit compatibility is used, after PVC, the inorganic fibers, solvent and stabilizer are kneaded together at a temperature of at least the temperature at which PVC and the solvent exhibit compatibility, the decomposition-type blowing agent is further added at a temperature of at most the decomposing point of the decomposition-type blowing agent, and then the resulting mixture is further kneaded.

Then, the prepared foamable composition is filled into a closable mold, suitably made of, for example, aluminum alloy and the like, and then heated under pressure, by the means such as mounting the mold in an oil hydraulic heating press machine, and the like. Although pressing and heating conditions are different depending on the composition of the foamable composition, it is necessary that the conditions be sufficient to substantially complete the decomposition of the decomposition-type blowing agent. For this purpose, both a temperature and a pressure, for example, a temperature of 110° to 180°C and a pressure of at least 140 $kg/cm^2$, are selected appropriately according to the nature of the foamable composition. When the prescribed temperature (for example, a temperature of at least 130°C) is reached, it is desirable to maintain that state for about 5 to 30 minutes or so. After that, with keeping pressing the mold, the temperature of the pressure/heat plate of the press machine is lowered down to a temperature appropriate to expand, using a cooling medium such as water and the like. The temperature appropriate to expand is different depending on the composition of the foamable composition, the form and size of the mold, and the like, but usually is a temperature lower than the above temperature of the press/heat, and at which the PVC phase has sufficient viscoelasticity so that the blowing gas will not leak away due to breakage of cell membranes on expanding. The temperature appropriate to expand is about 30° to 100°C, for example. When the temperature of the content of the mold reaches the temperature appropriate to expand, the mold is opened and the content is released to atmospheric pressure and at the same time of that, is expanded to obtain a final foam.

The employed solvent remains in the foam just after expansion. The residual solvent is evaporated away by allowing the foam to stand at a temperature appropriate to the particular solvent for an appropriate time. Removing the organic solvent from the foam can be also promoted by cutting the foam, using a cutter or the like, to give a larger surface area.

As for the expansion ratio of the rigid foamed article of the present invention, it is desirable that the expansion ratio is at least 50 times in order to use the rigid foamed article as a heat insulating material and to meet the requirements of both the model box test (that is, the quasi-noncombustive standard) and the substrate material test (that is, the noncombustive standard) according to Notice No. 1231 of Ministry of Construction (JAPAN). In consideration of the amount of generated heat and smoke on burning and profitability, the foam is desirable to have further high expansion ratio. Therefore, the expansion ratio is preferably at least 60 times, and further preferably at least 80 times. However, a normal foam having an expansion ratio higher than 200 times is difficult to prepare, and, if a good foam is prepared, it would be poor in its properties such as mechanical strength. Therefore, it is desirable that the expansion ratio is at most 200 times.

The above description is only an example of processes for preparing foams of the present invention, and it is needless to say that foams of the present invention may be prepared by other processes.

A further detailed description of the foamable composition, the process for preparing such, and the rigid foamed article of the present invention is given based on the following Examples, but the scope of the present invention is not limited by these Examples.

### Examples 1 to 5

Raw materials listed in Table 1 were weighed in the proportions shown in Table 2 so that a total weight of the raw materials would be 5000 g.

All raw materials, other than the blowing agent, were fed into a twin kneader of effective capacity of 3 ℓ, and kneaded together for 30 minutes to obtain a composition, with adjusting the kneading temperature to the temperatures shown in Table 2 by passing hot water through the jacket of the kneader.

After the temperature of the composition in the kneader was then lowered down to about 60°C, by passing warm water through the jacket of the kneader, the blowing agent was added, and the composition was subsequently kneaded together for 10 minutes to obtain a foamable composition.

The foamable composition after being kneaded was filled into an aluminum alloy mold of cavity size of 160 mm X 160 mm X 22 mm and the mold was covered with an aluminum plate and mounted in an oil hydraulic heat press machine. The temperature was then raised from room temperature (about 20°C) to 175°C, taking 10 minutes.

The clamping pressure of the press machine was about 150 kg per 1 cm$^2$ of the mold area in each Example.

After maintaining the mold at 175°C for 30 minutes, the temperature of the mold was lowered down to a temperature appropriate to expand, that is, the expanding temperature, taking about 10 minutes, by passing warm water through the cooling plate of the press machine, and the mold was kept at the same temperature for about 30 minutes.

After that, when the press machine was released from the clamping pressure, the expansion of the content of the mold was completed in about one second.

Obtained foams always had a good appearance and also had good cell uniformity as seen on cutting planes.

After standing at room temperature for about a half day, the foam was placed in a hot air circulating oven, and maintained at 45°C for about a half day, and then at 80°C for about one day to evaporate away the solvent.

Then the apparent density, expansion ratio, percentage of closed cells, volume retention ratio on heating, and degree of ashing of the foam were determined according to the following methods. The results are shown in Table 2.

(Apparent density)

A cube of 25 mm x 25 mm x 25 mm or a rectangular parallelopiped of 75 mm x 25 mm x 15 mm was cut into from the foam, and apparent density was calculated by measuring its volume and weight.

(Expansion ratio)

The apparent density of PVC in the foam was calculated from the blending amount (parts) of the inorganic substance, blowing agent and stabilizer per 100 parts of PVC shown in Table 2, according to the following equation:

[Apparent density of PVC in foam]

= [apparent density of foam] x 100/(100 + [amount of inorganic substance + amount of blowing agent + amount of stabilizer]) $(g/cm^3)$

Based upon a specific gravity of PVC of 1.4, the expansion ratio was calculated according to the following equation:

[Expansion ratio]

= [1.4/(apparent density of PVC in foam)] (times)

(Percentage of closed cells)

According to ASTM D2856, the percentage of closed cells was determined using an air comparison-type densimeter made by Beckman Toshiba Kabushiki Kaisha.

(Volume retentive ratio on heating)

A rectangular parallelopiped of 75 mm x 25 mm x 15 mm was cut from the foam, and put in a 200 mℓ capacity graduated cylinder into which water had been poured to about half of the graduation. The rectangular parallelopiped was forced under the water with a pushing tool and volume thereof before heating was obtained from the difference of the readings of the graduated cylinder before and after putting it into the cylinder. After air drying, the foam was allowed to stnad in a hot air-circulating oven at 200°C for one hour.

The volume after heating was obtained in the same manner as for that before heating.

The volume retention ratio on heating was calculated according to the following equation:

[Volume retentive ratio on heating]

= ([volume after heating]/[volume before heating]) x 100 (%)


(Degree of ashing)

A surface test was carried out in accordance with JIS A 1321, and the degree of ashing of the foam on burning was evaluated based on the following criterion for evaluation.

(Criterion for evaluation)

○ : The burned section of the foam rapidly extinguishes the fire, and is carbonized and turns black, which holds a certain amount of strength and is not collapsed easily, after the test.

✕ : The burned section of the foam is still ignited and finally turns to white ash, which holds no more strength and is easily collapsed, after the test.

The Brabender plastograph was operated in accordance with the following operating conditions. (Operating conditions of Brabender plastograph)

Each of PVC, dibasic lead stearate and the solvent is weighed at room temperature and they are well mixed together using a spatula in a beaker to form a paste-like mixture.

Such a paste-like mixture is fully filled into the kneading chamber without any gaps, of the plastograph which has been cooled down to room temparature.

The heat medium temperature in the heat medium resevoir is maintained at 170°C. The temperature is begun to raise by providing the heat medium to the jacket of the plastgraph while revolving the rotors of the plastograph at 30 rpm. Then, both the temperature of the paste-like mixture and the torque applied to the rotor are continually recorded with a pen recorder.

The torque begins to rise at a certain temperature (different depending on the type of solvent) up to a maximum value, and then slowly falls. Both the exhibited maximum torque value and the temperature of the paste-like mixture at that time are read and recorded.

## Table 1

| Raw material | Description | Note |
|---|---|---|
| PVC | X-2380 | Suspension polymerization resin (available from Kanegafuchi Kagaku Kogyo Kabushiki Kaisha) average polymerization degree : 2380 |
| | KS-1700 | Suspension polymerization resin (available from Kanegafuchi Kagaku Kogyo Kabushiki Kaisha) average polymerization degree : 1700 |
| | PSH-660 | Dispersion resin (available from Kanegafuchi Kagaku Kogyo Kabushiki Kaisha) average polymerization degree : 2400 |
| | TK-2500HS | Suspension polymerization resin (available from Shin-etsu Kagaku Kogyo Kabushiki Kaisha) average polymerization degree : 2460 |
| Rock wool | Rock wool | Diameter: 5 μm, average fiber length: 3 mm |
| Inorganic particle | Talc | Average particle size: 5.5 μm |
| | Calcium carbonate | Particle size: through 70 mesh |
| Solvent | Cyclohexanone | |
| | Acetone | |
| | Toluene | |
| Blowing agent | AIBN | Azobisisobutyronitrile |
| | ADCA | Azodicarbonamide |
| | DPT | N,N'-dinitrosopentamethylenetetramine |

EP 0 362 411 A1

- continued -

| Raw material | Description | Note |
|---|---|---|
| Stabilizer | SL | Dibasic lead stearate |
| | TB | Tribasic lead sulfate |
| Blowing aid | CP | Urea-type composition |
| Reused material (Recycled material) | RC-A | Material obtained by crushing non-recycled foam ($\leq 5$ mm) |
| | RC-B | Material obtained by crushing 3 times recycled foam ($\leq 5$ mm) |

EP 0 362 411 A1

## Comparative Example 1

A foam was obtained in the same manner as in Example 3, except that only toluene was used without cyclohexanone as a solvent.

The obtained foam had a low percentage of closed cells of 24 %, and shrank and deformed to a saddle-like form during evaporation of the solvent.

The expansion ratio of the obtained foam was 15 times, which was about one sixth of that in Example 3. The maximum torque of the toluene was 3.8 N·m.

## Comparative Example 2

A foam was obtained in the same manner as in Example 4, except that the kneading temperature of the twin kneader was set at 30°C which is a temperature below 80°C: the temperature at which the mixed solvent of 67 parts of cyclohexanone and 333 parts of toluene (weight ratio = 1/5) exhibits the maximum torque.

The obtained foam had a low percentage of closed cells of 40 %, and shrank during evaporating away the solvent. Its expansion ratio was 18 times, which was about one third of that in Example 4.

## Table 2

| Example No. | | Components of composition (parts by weight) | | | | | | | |
|---|---|---|---|---|---|---|---|---|---|
| | | Inorganic substance | | | Organic solvent | | | Blowing agent | Stabilizer |
| | PVC | Rock wool | Talc | $CaCO_3$ | Kind | Max. torque temp. (°C) | Max. torque (N·m) | | |
| 1 | X-2380 (100) | (30) | (240) | (80) | Cyclohexanone (83) Toluene (417) | 80 | 10.8 | AIBN (35) | SL (6) |
| 2 | X-2380 (100) | (100) | (240) | (60) | Cyclohexanone (100) Toluene (500) | 80 | 10.8 | AIBN (35) | SL (6) |
| 3 | PSH-660 (100) | (30) | (240) | (60) | Cyclohexanone (83) Toluene (417) | 80 | 10.8 | AIBN (40) | SL (6) |
| 4 | PSH-660 (100) | (75) | (160) | (40) | Cyclohexanone (67) Toluene (333) | 80 | 10.8 | AIBN (35) | SL (6) |
| 5* | X-2380 (100) | (30) | (240) | (60) | Cyclohexanone (83) Toluene (417) | 80 | 10.8 | *DPT (20) | TB (6) |
| Comp. Ex. 1 | PSH-660 (100) | (30) | (240) | (60) | Toluene (500) | 104 | 3.8 | AIBN (40) | SL (6) |
| Comp. Ex. 2 | PSH-660 (100) | (75) | (160) | (40) | Cyclohexanone (67) Toluene (333) | 80 | 10.8 | AIBN (35) | SL (6) |

EP 0 362 411 A1

| Kneading temp. (°C) | Blowing temp. (°C) | Properties of foam | | | | |
|---|---|---|---|---|---|---|
| | | Apparent density $(g/cm^3)$ | Expansion ratio (times) | Percentage of closed cells (%) | Volume retentive ratio on heating (%) | Degree of ashing |
| 97 | 40 | 0.086 | 77 | 67 | 73 | ◯ |
| 96 | 35 | 0.097 | 78 | 61 | 94 | ◯ |
| 98 | 30 | 0.069 | 98 | 69 | 83 | ◯ |
| 87 | 40 | 0.115 | 51 | 67 | 91 | ◯ |
| 98 | 34 | 0.100 | 71 | 61 | 71 | ◯ |
| 100 | 40 | 0.439 | 15 | 24 | 96 | ◯ |
| 30 | 40 | 0.324 | 18 | 40 | 93 | ◯ |

Note: In Example 5, 20 parts of a urea-type blowing aid was used in combination with DPT.

EP 0 362 411 A1

## Example 6

A specimen of 220 mm (length) x 220 mm (breadth) x 25 mm (thickness) was cut off from the foam obtained in Example 2, and subjected to a surface test according to JIS A 1321. The temperature-time area (td$\theta$) was 7°C·min; the smoking coefficient (cA) was 6, and the dimension of the specimen after test was 216 mm (length) x 217 mm (breadth). The amount of generated heat, the amount of smoke, and the amount of deformation of the obtained foam on burning were all found to be small.

These results prove that a rigid foam which contains inorganic substances, such as rock wool, which is excellent in safety and health for the human body, made of the foamable composition of the present invention, is excellent in dimensional stability when used at high temperatures, that is, thermal resistance, which is small in its amounts of generated heat, smoke, generated noxious gas, and deformation on burning, and the like, and has a large percentage of closed cells, and that a foamable composition from which such a foam is obtained can be advantageously and easily prepared, on an industrial scale in accordance with the present invention.

## Examples 7 to 12

Raw materials listed on Table 1 were weighed in the proportion shown in Table 3 so that the total weight would be 5000 g.

All raw materials other than the blowing agent were fed into a twin kneader of effective capacity of 3 ℓ, and kneaded together for 30 to 50 minutes while controlling the kneading temperature as shown in Table 3 by passing hot water through the jacket of the kneader to obtain a composition.

After the temperature of the composition in the kneader was then lowered down to about 70°C, by passing warm water through the jacket of the kneader, DPT and blowing aid such as urea-type blowing aid which is conventionally used were added, and the composition subsequently kneaded for a further 10 minutes to obtain a foamable composition.

The resulting foamable composition after kneading was filled into an aluminum alloy mold of cavity size of 160 mm x 160 mm x 22 mm, and the mold was covered with an aluminum plate and mounted on an oil hydraulic hot press machine, and the temperature was raised from room temperature (about 20°C) to 145°C taking 10 minutes.

The clamping pressure of the press machine was about 150 kg per 1 $cm^2$ of the mold area in each Example.

After maintaining the mold at 145°C for 10 minutes, the temperature of the mold was lowered down to a temperature appropriate to expand (30 to 35°C), taking about 15 minutes, by passing warm water through the cooling plate of the hot press machine.

After that, when the press machine was released from the clamping pressure, the expansion of the contents of the mold was completed after about one second.

Obtained foams always had a good appearance and also had good uniformity of cells on cutting planes.

The foam was placed in a hot air circulating oven, and was allowed to stand at 55°C for about a half day, and further at 80°C for about one day, to evaporate away the solvent.

Then the apparent density, expansion ratio and degree of ashing of the foam were determined according to the same methods as in for Examples 1 to 5. The results are shown in Table 3.

### Comparative Examples 3 to 5

Raw materials listed on Table 1 were weighed in the proportion shown in Table 3 so that a total weight would be 5000 g. A foam was obtained and the properties of the foam were determined according to the same manner as in Examples 7 to 12 except that the temperatures at which the hot press machine operated were adjusted as shown in Table 3. The results are shown in Table 3.

Table 3

| Example No. | PVC | Inorganic substance | | | Organic solvent | | | Blow-ing agent | Blow-ing aid | Recycled mat. | Stabili-zer |
| | | Rock wool | Talc | $CaCO_3$ | Kind | Max. torque temp. (°C) | Max. torque (N·m) | | | | |
|---|---|---|---|---|---|---|---|---|---|---|---|
| 7 | PSH-660 (100) | (20) | (240) | (60) | Cyclohexanone (83) Toluene (417) | 80 | 10.8 | DPT (20) | CP (20) | – | TB (6) |
| 8 | TK-2500HS (100) | (30) | (240) | (60) | Cyclohexanone (83) Toluene (417) | 80 | 10.8 | DPT (20) | CP (20) | – | TB (6) |
| 9 | TK-2500HS (100) | (31) | (100) | (540) | Cyclohexanone (105) Toluene(525) | 80 | 10.8 | DPT (28) | CP (28) | – | TB (6) |
| 10 | TK-2500HS (100) | (31) | (100) | (540) | Acetone (105) Toluene (525) | 78 | 9.7 | DPT (28) | CP (28) | – | TB (6) |
| 11 | TK-2500HS (70) | (21) | (168) | (42) | Cyclohexanone (83) Toluene (417) | 80 | 10.8 | DPT (20) | CP (20) | RC-A (129) | TB (6) |
| 12 | TK-2500HS (80) | (24) | (192) | (48) | Cyclohexanone (83) Toluene (417) | 80 | 10.8 | DPT (20) | CP (20) | RC-B (83) | TB (6) |

EP 0 362 411 A1

<table>
<tr><th colspan="11">Components of composition (parts by weight)</th></tr>
<tr><th rowspan="3">Example No.</th><th rowspan="3">PVC</th><th colspan="3">Inorganic substance</th><th colspan="3">Organic solvent</th><th rowspan="2">Blow-ing agent</th><th rowspan="2">Blow-ing acid</th><th rowspan="2">Recycled mat.</th><th rowspan="2">Stabili-zer</th></tr>
<tr><th rowspan="2">Rock wool</th><th rowspan="2">Talc</th><th rowspan="2">CaCO$_3$</th><th rowspan="2">Kind</th><th rowspan="2">Max. torque temp. (°C)</th><th rowspan="2">Max. torque (N·m)</th></tr>
<tr></tr>
<tr><td>Comp. Ex.3</td><td>PSH-660 (100)</td><td>—</td><td>(240)</td><td>(60)</td><td>Toluene (500)</td><td>104</td><td>3.8</td><td>DPT (20)</td><td>CP (20)</td><td>—</td><td>TB (6)</td></tr>
<tr><td>Comp. Ex.4</td><td>PSH-660 (100)</td><td>—</td><td>(240)</td><td>(60)</td><td>Toluene (500)</td><td>104</td><td>3.8</td><td>DPT (20)</td><td>CP (20)</td><td>—</td><td>TB (6)</td></tr>
<tr><td>Comp. Ex.5</td><td>PSH-660 (100)</td><td>—</td><td>(240)</td><td>(60)</td><td>Toluene (417) Cyclohexanone (83)</td><td>80</td><td>10.8</td><td>DPT (20)</td><td>CP (20)</td><td>—</td><td>TB (6)</td></tr>
</table>

EP 0 362 411 A1

| Kneading temp. (°C) | Hot press temp. (°C) | Properties of foam | | | |
|---|---|---|---|---|---|
| | | Apparent density $(g/cm^3)$ | Expansion ratio (times) | Sectionan view of foam | Degree of ashing |
| 100 | 145 | 0.081 | 77 | Uniform fine cells | ◯ |
| 100 | 145 | 0.093 | 72 | Uniform fine cells | ◯ |
| 100 | 145 | 0.125 | 93 | Uniform fine cells | ◯ |
| 80 | 145 | 0.225 | 52 | Uniform fine cells | ◯ |
| 100 | 145 | 0.085 | 79 | Uniform fine cells | ◯ |
| 100 | 145 | 0.080 | 83 | Uniform fine cells | ◯ |
| 100 | 145 | − | − | Not blow | − |
| 100 | 175 | − | − | Not blow | − |
| 100 | 175 | − | − | Very colored | − |

EP 0 362 411 A1

These results prove that a PVC foam, which has excellent characteristics such as a high expansion ratio and a good cell uniformity on cutting planes and can be recycled, can be obtained even with the use of an inexpensive blowing agent, DPT, according to the preparing process of the present invention.

## Examples 13 to 18

In addition to PVC (PSH-660), a solvent, blowing agent (AIBN), stabilizer (SL) and talc as inorganic particles which were listed on Table 1, GF-A (diameter 10 μm, length 150 μm) or GF-B (diameter 10 μm, length 3 mm) as glass fiber, and calcium carbonate (average particle size 14 μm) or aluminum hydroxide (average particle size 25 μm) as inorganic particles, were weighed in the proportion shown in Table 4 so that the total weight would be 5000 g.

All raw materials other than the blowing agent were fed into a twin kneader of effective capacity of 3 ℓ, and kneaded together for 30 minutes, while controlling the kneading temperature as shown in Table 4 by passing hot water through the jacket of the kneader, to obtain a composition.

Then the temperature of the composition in the kneader was lowered down to about 60°C by passing warm water through the jacket of the kneader, the blowing agent was added, and the composition thus obtained was subsequently kneaded together for a further 10 minutes to obtain a foamable composition.

The foamable composition after kneading was filled into an aluminum alloy mold of cavity size of 160 mm x 160 mm x 22 mm, and the mold was covered with an aluminum plate and mounted on an oil hydraulic heat press machine, and the temperature was raised from room temperature (about 20°C) to 150°C taking 10 minutes.

The clamping pressure of the press machine was about 150 kg per 1 $cm^2$ of the mold area in each Example.

After maintaining the mold at 150°C for 10 minutes, the temperature of the mold was lowered down to a temperature appropriate to expand (that is, the expanding temperature) taking about 10 minutes, by passing warm water through the cooling plate of the press machine, and the mold was kept at the same temperature for about 15 minutes.

After that, when the press machine was released from the clamping pressure, the expansion of the contents of the mold was completed in about one second.

Obtained foams always had good appearance and also had good uniformity of cells on cutting planes.

The foam was placed in a hot air circulating oven, and was allowed to stand at 55°C for about a half day, and further at 80°C for about one day to evaporate away the solvent.

Then the apparent density, expansion ratio, percentage of closed cells, volume retentive ratio on heating, and degree of ashing of the foam were determined according to the same procedures as those in Examples 1 to 5. A surface test was carried out according to JIS A 1321. The results are shown in Table 4.

Comparative Example 6

A foam was obtained and the properties of the resulting foam were evaluated in the same manner as that set forth in Example 16 except that no glass fibers were used. The results are shown in Table 4.

The obtained foam shrank to a certain extent on heating at 200°C for one hour. Its volume retentive ratio on heating was 93 %. The heated side of the foam in the surface test collapsed and fell down.

Comparative Example 7

A foam was obtained and the properties of the resulting foam were evaluated in the same manner as that set forth in Example 16 except that a single solvent of toluene, without cyclohexanone, was used. The results are shown in Table 4.

This foam had a small percentage of closed cells of 7 %, and during evaporating away the solvent, severely shrank and deformed to a saddle-like form. The expansion ratio of the obtained foam was 14 times, which was 1/4.4 times of that of the foam obtained in Example 16.

Table 4

| Example No. | | Inorganic substance | | | | Solvent | | | | Blow-ing agent | Stabili-zer |
|---|---|---|---|---|---|---|---|---|---|---|---|
| | PVC | Glass fiber | Talc | CaCO$_3$ | Al(OH)$_3$ | Toluene | Cyclo-hexanone | Max. torque temp. (°C) | Max. torque (N·m) | | |
| 13 | (100) | GF-A (30) | (100) | (270) | (270) | (458) | (92) | 80 | 10.8 | (42.5) | (6) |
| 14 | (100) | GF-B (10) | (100) | (270) | (270) | (458) | (92) | 80 | 10.8 | (42.5) | (6) |
| 15 | (100) | GF-B (5) | (100) | (270) | (270) | (458) | (92) | 80 | 10.8 | (42.5) | (6) |
| 16 | (100) | GF-B (10) | (100) | (200) | (100) | (417) | (83) | 80 | 10.8 | (42.5) | (6) |
| 17 | (100) | GF-B (5) | (100) | (200) | (100) | (417) | (83) | 80 | 10.8 | (42.5) | (6) |
| 18 | (100) | GF-B (5) | (100) | (270) | (270) | (458) | (92) | 80 | 10.8 | (42.5) | (0) |
| Comp. Ex.6 | (100) | (0) | (100) | (200) | (100) | (417) | (83) | 80 | 10.8 | (42.5) | (6) |
| Comp. Ex.7 | (100) | GF-B (10) | (100) | (200) | (100) | (500) | (0) | 104 | 3.8 | (42.5) | (6) |

Components of composition (parts by weight)

EP 0 362 411 A1

| Knead-ing temp. (°C) | Blowing temp. (°C) | Properties of foam | | | | Surface test | | | | Degree of ashing |
|---|---|---|---|---|---|---|---|---|---|---|
| | | Apparent density (g/cm$^3$) | Expantion ratio (times) | Percentage of closed cells (%) | Volume retentive ratio on heating (%) | Temp.-time. area (°C·min) | Smoking coef. (cA) | Crack generation or the like | Judgement | |
| 95 | 30 | 0.104 | 110 | 43 | 100 | 0 | 0.9 | No | Acceptable | ◯ |
| 92 | 30 | 0.195 | 57 | 20 | 100 | 95 | 2.4 | No | Acceptable | ◯ |
| 98 | 30 | 0.156 | 71 | 42 | 100 | 73 | 1.8 | No | Acceptable | ◯ |
| 94 | 30 | 0.127 | 62 | 35 | 100 | 90 | 5.4 | No | Acceptable | ◯ |
| 96 | 30 | 0.094 | 82 | 43 | 100 | 45 | 2.1 | No | Acceptable | ◯ |
| 94 | 30 | 0.167 | 67 | 43 | 100 | 79 | 1.2 | No | Acceptable | ◯ |
| 99 | 30 | 0.106 | 72 | 68 | 93 | 93 | 4.5 | Collapsed and fell down | Rejection | ◯ |
| 99 | 30 | 0.546 | 14 | 7 | 100 | - | - | - | - | - |

EP 0 362 411 A1

From the above-mentioned results, it is found that, in surface tests, the temperature-time area of the foam obtained in Example 13 is 0°C·min, and the smoking coefficient (cA) of any foam obtained in Examples 13 to 18 is at most 6, and the volume retention ratio on heating of the latter is respectively 100 % without generation of any cracks or the like. Thus, it is found that the obtained foam is small in its amount of generated heat, amount of smoke, and amount of deformation of foam on burning.

As described above, it is found that a foam made of the foamable composition of the present invention is a rigid foam which contains an inorganic substance such as glass fiber which is excellent in safety and health for the human body, is excellent in dimensional stability when used at high temperature, that is, thermal resistance, which is small in its amounts of generated heat, smoke, noxious gas and deformation on burning, and that a foamable composition from which such product can be attained can be industrially advantageously and easily prepared according to the preparing process of the present invention.

### Examples 19 to 29

Raw materials listed on Table 5 were weighed in the proportion shown in Table 6 so that the total weight would be 5000 g.

All raw materials, other than the blowing agent, were fed into a twin kneader of effective capacity of 3 ℓ, and kneaded together for 30 to 50 minutes while controlling the temperature to 85° to 100°C by passing hot water through the jacket of the kneader, to obtain a foamable composition of the present invention.

The foamable composition after kneading was filled into an aluminum alloy mold of cavity size of 160 mm x 160 mm x 22 mm, and the mold was covered with an aluminum plate and mounted in an oil hydraulic hot press machine, and then the temperature was raised from room temperature (about 20°C) to 145°C taking 10 minutes. The clamping pressure of the hot press machine was about 150 kg per 1 $cm^2$ of the mold area in each Example.

After maintaining the mold at 145°C for 10 minutes, the temperature of the mold was lowered down to a temperature appropriate to expand (30° to 35°C), taking about 15 minutes, by passing warm water through the cooling plate of the hot press machine.

After that, when the press machine was released from the clamping pressure, the expansion of the content of the mold was completed in about one second.

Obtained foams always had a good appearance and had good cell uniformity on cutting planes.

The foam was placed in a hot air circulating oven and allowed to stand at 55°C for about a half day, and further at 80°C for about one day, to evaporate away the solvent.

Then the apparent density, expansion ratio and degree of ashing as properties of the obtained rigid foam, were determined with the same procedures as those in Examples 1 to 5. The temperature-time area as an index of the amount of generated heat on burning was measured according to the following method. The results are shown in Table 6.

(Temperature-time area)

The temperature-time area was measured according to JIS A1321 "Method for testing incombustivity of interior materials of building and their application process".

## Comparative Examples 8 and 9

Raw materials listed on Table 5 were weighed in the proportions shown in Table 6 so that the total weight would be 5000 g. A foam was obtained and its properties were determined in the same manner as those in Examples 19 to 29. The results are shown in Table 6.

<center>Table 5</center>

| Raw material | Description | Note |
|---|---|---|
| PVC | Suspension-polymerized vinyl chloride resin | Average polymerization degree ; 2450 |
| Blowing agent | DPT | N,N'-dinitrosopentamethylenetetramine |
| Zinc-containing compound | CZ | Basic zinc carbonate |
| | PZ | Zinc phosphate |
| | BZ | Zinc borate |
| | SZ | Zinc stearate |
| | OZ | Zinc octoate |
| | MZ | Zinc maleate |
| Alumimun hydroxide | | |
| Solvent | Cyclohexanone Toluene | |
| Inorganic filler | Rock wool | Diameter 5μm, average fiber length 3 mm |
| | Talc | Average particle size 5.5μm |
| | Calcium carbonate | Particle size through 70 mesh |
| Blowing aid | Boric acid CP | Urea-type composition |
| Stabilizer | TB | Tribasic lead sulfate |

EP 0 362 411 A1

Table 6

| Ex. No. | PVC | Blowing agent (DPT) | Zn-cont. compd. | Al(OH)$_3$ | Solvent | | Max. torque temp(°C) | Max. torque (N·m) | Inorg.substance | | | Blowing aid | Stabi-lizer (TB) |
|---|---|---|---|---|---|---|---|---|---|---|---|---|---|
| | | | | | Cyclo-hexanone | Toluene | | | Rock wool | Talc | CaCO$_3$ | | |
| | | | | | | | | **Components of foamable composition (parts by weight)** | | | | | |
| 19 | (100) | (30) | CZ(75) | (100) | (100) | (500) | 80 | 10.8 | (31) | (100) | (365) | Boric acid(20) | (6) |
| 20 | (100) | (30) | PZ(90) | (100) | (100) | (500) | 80 | 10.8 | (31) | (100) | (350) | Boric acid(20) | (6) |
| 21 | (100) | (30) | BZ(10) | (300) | (100) | (500) | 80 | 10.8 | (31) | (100) | (230) | Boric acid(20) | (6) |
| 22 | (100) | (30) | BZ(90) | (220) | (100) | (500) | 80 | 10.8 | (31) | (100) | (230) | Boric acid(20) | (6) |
| 23 | (100) | (28) | SZ(10) | (100) | (100) | (500) | 80 | 10.8 | (31) | (100) | (440) | CP (28) | (6) |
| 24 | (100) | (30) | SZ(20) | (150) | (100) | (500) | 80 | 10.8 | (31) | (100) | (390) | Boric acid(20) | (6) |
| 25 | (100) | (30) | OZ(10) | (100) | (100) | (500) | 80 | 10.8 | (31) | (100) | (440) | Boric acid(20) | (6) |
| 26 | (100) | (30) | MZ(10) | (100) | (100) | (500) | 80 | 10.8 | (31) | (100) | (440) | Boric acid(20) | (6) |
| 27 | (100) | (30) | BZ(95) | (15) | (100) | (500) | 80 | 10.8 | (31) | (100) | (430) | Boric acid(20) | (6) |
| 28 | (100) | (30) | BZ (5) | (570) | (100) | (500) | 80 | 10.8 | (31) | (100) | (0) | Boric acid(20) | (6) |
| 29 | (100) | (30) | BZ(95) | (0) | (100) | (500) | 80 | 10.8 | (31) | (100) | (445) | Boric acid(20) | (6) |
| Comp.Ex. | | | | | | | | | | | | | |
| 8 | (100) | (28) | − | (0) | (100) | (500) | 80 | 10.8 | (31) | (100) | (540) | Boric acid(28) | (6) |
| 9 | (100) | (28) | − | (270) | (100) | (500) | 80 | 10.8 | (31) | (100) | (270) | Boric acid(28) | (6) |

EP 0 362 411 A1

- continued -

|  | Properties of foam | | |
| Ex. No. | Apparent density $(g/cm^3)$ | Expansion ratio (times) | Temp.-time area $(°C·min)$ |
| 19 | (0.115) | (102) | (0) |
| 20 | (0.106) | (111) | (11) |
| 21 | (0.100) | (117) | (0) |
| 22 | (0.125) | (94) | (0) |
| 23 | (0.109) | (108) | (0) |
| 24 | (0.104) | (115) | (9) |
| 25 | (0.100) | (119) | (1) |
| 26 | (0.110) | (108) | (74) |
| 27 | (0.115) | (102) | (0) |
| 28 | (0.119) | (98) | (0) |
| 29 | (0.105) | (112) | (50) |
| Comp.Ex. | | | |
| 8 | (0.130) | (94) | (256) |
| 9 | (0.125) | (94) | (118) |

EP 0 362 411 A1

As described above, a foamable composition of the present invention presents an inexpensive foam which produces reduced amount of heat generated on burning and is excellent in safety against fire. In addition, this rigid foam proves to be suitably used as a thermal insulating material for construction uses and the like because of its reduced amount of heat generated on burning and its thermal insulating function as a foam.

Examples 30 to 33 and Comparative Example 10

In addition to PVC, rock wool, talc, a blowing agent, a stabilizer and a solvent which were listed on Table 1, aluminum hydroxide (average particle size 1 μm), calcium carbonate (average particle size 2 μm), and zinc borate (average particle size 6 μm) were weighed in the proportions shown in Table 7 so that the total weight would be 33 kg.

All raw materials other than the blowing agent were fed into a twin kneader of effective capacity of 20 ℓ and kneaded together for 25 minutes, while controlling the kneading temperature of the raw materials to be 85° to 105°C by passing hot water through the jacket of the kneader, to obtain a composition.

The temperature of the composition in the kneader was lowered down to about 70°C by passing warm water through the jacket of the kneader, the blowing agent was added, and then the resultant compositon was subsequently kneaded together for 10 minutes to obtain a foamable composition.

The foamable composition after kneading was filled into an aluminum alloy mold of cavity size of 710 mm x 640 mm x 23 mm, and the mold was covered with an aluminum plate and mounted on an oil hydraulic heat press machine, and then the temperature was raised from room temperature (about 10°C) to 175°C taking 20 minutes.

The clamping pressure of the press machine was about 200 kg per 1 $cm^2$ of the area of the mold in each Example.

After maintaining the mold at 175°C for 15 minutes, the temperature of the mold was lowered down to 30° to 35°C, taking about 10 minutes, by passing warm water through the cooling plate of the press machine, and the mold was kept at the same temperature for about 30 minutes.

After that, when the press machine was released from the clamping pressure, the expansion of the content of the mold was completed in about one second.

While the foam obtained in Examples 30 and 31 had a good form similar to the form of the mold cavity and a good appearance, the one obtained in Comparative Example 10 was good in appearance but somewhat thick at its edge sections. After the foams were allowed to stand at 50°C for about a half day, and further at 75°C for about one day, in an aging chamber, to evaporate away the solvent, the foams were finished to have a size of 1000 mm x 900 mm x 30 mm. Using these finished foams, model box tests according to Notice No. 1231 by the Ministry of Construction (Japan), surface tests and tests for harmfulness of gas according to JIS A1321, determinations of thermal conductivity according to ASTM C518, and measuring of degree of ashing were carried out. The results are shown in Table 7.

The expansion ratio and degree of ashing in Table 7 were calculated in the same manner as in Examples 1 to 5.

Table 7

|  |  | Ex.30 | Ex.31 | Ex.32 | Ex.33 | Comp.Ex.10 |
|---|---|---|---|---|---|---|
| Composition of raw material (part) | PSH-600 | 100 | 100 | 100 | 100 | 100 |
|  | Rock wool | 31 | 31 | 31 | 31 | 0 |
|  | Zinc borate | 0 | 0 | 270 | 0 | 0 |
|  | $Al(OH)_3$ | 270 | 220 | 0 | 0 | 270 |
|  | Talc | 100 | 100 | 100 | 100 | 100 |
|  | $CaCO_3$ | 270 | 320 | 270 | 540 | 270 |
|  | AIBN | 42.5 | 42.5 | 0 | 42.5 | 42.5 |
|  | DPT | 0 | 0 | 28 | 0 | 0 |
|  | SL | 6 | 6 | 0 | 6 | 6 |
|  | TB | 0 | 0 | 6 | 0 | 0 |
|  | Toluene | 525 | 525 | 525 | 525 | 525 |
|  | Cyclohexanone | 105 | 105 | 105 | 105 | 105 |
| Max. torque temp. of solvent (°C) |  | 80 | 80 | 80 | 80 | 80 |
| Max. torque of solvent (N·m) |  | 10.8 | 10.8 | 10.8 | 10.8 | 10.8 |

EP 0 362 411 A1

- continued -

|  | | Ex.30 | Ex.31 | Ex.32 | Ex.33 | Comp.Ex.10 |
|---|---|---|---|---|---|---|
| Properties of foam | Apparent density (g/cm$^3$) | 0.127 | 0.113 | 0.172 | 0.121 | 0.107 |
| | Expansion ratio (times) | 90 | 101 | 66 | 95 | 103 |
| | Cell size (mm) | 1 to 2 | 1 to 2 | 1 to 2 | 1 to 2 | 1 to 2 |
| | Thermal conductivity (Kcal/mh°C) | 0.045 | 0.047 | – | 0.042 | – |
| Model box test | Max. exotherm. rate (KJ/s) | 107 | 117 | – | 145 | – |
| | Total calorific value (KJ) | 39,800 | 48,700 | – | 62,200 | – |
| | Max. temp. in the box (°C) | 467 | 557 | – | 662 | – |
| | Destruction by fall | None | None | – | None | – |
| | Judgements | Acceptable | Acceptable | – | Rejection | – |
| Surface test | Smoking coefficient (CA) | 1.2 | 1.5 | 34 | 3.0 | 3.0 |
| | Temp.-time area (°C·min) | 0 | 9 | 0 | 41 | 42 |
| | Generated cracks | None | None | None | None | Piercing cracks of 3 mm-wide |
| | Dimension before test (mm) | 220x220 | 220x220 | 220x221 | 220x220 | 220x219 |
| | Dimension after test (mm) | 220x220 | 220x219 | 217x217 | 216x216 | 218x218 |
| | Judgements | Acceptable | Acceptable | Acceptable | Acceptable | Rejection |
| Tests for harmfulness of gas | Motion-stopping time of mouse (min) | At least 15 | – | – | – | – |
| | Judgements | Acceptable | – | – | – | – |
| Degree of ashing | | ◯ | ◯ | ◯ | ◯ | ◯ |

EP 0 362 411 A1

Example 34

A foam was obtained in the same manner as in Examples 30 to 33 except that the raw materials were weighed in the proportions shown in Table 8 without using talc.

Although the obtained foam met the quasi-noncombustive standard, the foam was large in cell size, that was 3 to 5 mm because talc was not used.

Table 8

| Blending of raw materials (parts) | PSH-660 | 100 |
|---|---|---|
| | Rock wool | 31 |
| | Talc | 0 |
| | $Al(OH)_3$ | 320 |
| | $CaCO_3$ | 320 |
| | AIBN | 42.5 |
| | SL | 6 |
| | Toluene | 525 |
| | Cyclohexanone | 105 |
| Max. torque temp. of solvent (°C) | | 80 |
| Max. torque of solvent (N·m) | | 10.8 |
| Properties of foam | Apparent density (g/cm$^3$) | 0.111 |
| | Expansion ratio (times) | 103 |
| | Cell size (mm) | 3 to 5 |

These results prove that a foam of the present invention containing rock wool which is excellent in safety and health to the human body, generates small amounts of heat, smoke and deformation of foam on burning, is difficult to collapse on burning due to its large strength of residual body after burning, is excellent in safety from fire, and is excellent in thermal insulating property, and that the foams obtained in Examples 30, 31, 32 and 34 meet the requirements of the model box test, the surface test and the tests for harmfulness of gas, and can be suitably used as, for example, a quasi-noncombustive thermal insulating material for construction uses.

Examples 35 to 52 and Comparative Examples 11 to 14

First, 100 parts of PSH-660 as PVC, 30 parts of rock wool, 100 parts of talc, 270 parts of calcium carbonate, 270 parts of aluminum hydroxide, 6 parts of dibasic lead stearate, and 630 parts of solvent of which composition was listed on Table 9, were mixed and weighed so that the total weight would be 5000 g.

All raw materials, other than the blowing agent, were fed into a twin kneader of effective capacity of 3 ℓ, and kneaded together for 30 minutes while controlling the kneading temperature to 80° to 110°C by passing hot water through the jacket of the kneader, to obtain a composition.

After the temperature of the composition in the kneader was lowered down to about 60°C by passing warm water through the jacket of the kneader, a blowing agent (AIBN) was added, and then the composition was subsequently kneaded together for 10 minutes to obtain a foamable composition.

The foamable composition after kneading was filled into an aluminum alloy mold of cavity size of 160 mm X 160 mm X 22 mm, and the mold was covered with an aluminum plate and mounted in an oil hydraulic heat press machine, and then the temperature was raised from room temperature (about 20°C) to 165°C taking 10 minutes.

The clamping pressure of the press machine was about 150 kg per 1 $cm^2$ of the area of the mold in each Example.

Then, after maintaining the mold at 165°C for 10 minutes, the temperature of the mold was lowered down to 30° to 35°C, taking about 10 minutes, by passing warm water through the cooling plate of the press machine, and the mold was kept at the same temperature for about 15 minutes.

After that, when the press machine was released from the clamping pressure, the expansion of the content of the mold was completed in about one second.

Obtained foams always had a good appearance and also had good cell uniformity on cutting planes.

The foam was placed in a hot air circulating oven, and was allowed to stand at 55°C for about a half day, and further at 80°C for about one day, to evaporate away the solvent.

Then the apparent density, expansion ratio and degree of ashing of the obtained foam were determined in the same procedures as in Examples 1 to 5. The coefficient of shrinkage after expansion and degree of ashing were evaluated according to the following method. The results are shown in Table 9.

(Coefficient of shrinkage after expansion)

The volume (VA) of the foam immediately after expansion, and the volume (VB) of the foam after evaporating away the solvent therefrom, were determined by measuring the dimensions of the foam with a pair of slide calipers or a tape measure.

The coefficient of shrinkage after expansion was calculated according to the following equation:

[Coefficient of shrinkage after expansion]
= (1-VB/VA) X 100 (%)

In Tables 9 and 10, TOL means toluene, CH means cyclohexanone, ACE means acetone, DIBK means diisobutylketone, MEK means methylethylketone, CP means cyclopentanone, MIBK means methylisobutylketone, MO means mesityl oxide, DMF means dimethylformamide, MC means methyl cellosolve, BA means n-butyl acetate, THF means tetrahydrofuran, BC means butyl cellosolve, and XY means xylene.

Table 9

| Ex. No. | Solvent | | | Properties of foam | | | |
|---|---|---|---|---|---|---|---|
| | Component (weight ratio) | Max. torque temp. (°C) | Max. torque (N·m) | Coef. of shrinkage after expansion(%) | Apparent density(g/cm$^3$) | Expansion ratio(times) | Degree of ashing |
| 35 | TOL/CH=5/1 | 80 | 10.8 | 17 | 0.100 | 115 | ○ |
| 36 | TOL/CH=14/1 | 98 | 6.8 | 35 | 0.160 | 71 | ○ |
| 37 | TOL/ACE=5/1 | 78 | 9.7 | 29 | 0.126 | 91 | ○ |
| 38 | TOL/DIBK=5/1 | 101 | 4.1 | 31 | 0.191 | 60 | ○ |
| 39 | TOL/MEK=5/1 | 87 | 5.1 | 34 | 0.158 | 73 | ○ |
| 40 | TOL/CP=5/1 | 80 | 6.8 | 28 | 0.124 | 92 | ○ |
| 41 | TOL/MIBK=5/1 | 76 | 5.3 | 31 | 0.185 | 62 | ○ |
| 42 | TOL/MO=5/1 | 88 | 5.8 | 27 | 0.139 | 82 | ○ |
| 43 | TOL/DMF=9/1 | 76 | 6.1 | 13 | 0.108 | 106 | ○ |
| 44 | TOL/CH=9/1 | 87 | 5.7 | 27 | 0.177 | 79 | ○ |
| 45 | TOL/CH=3/1 | 70 | 9.3 | 7 | 0.111 | 103 | ○ |
| 46 | TOL/ACE=9/1 | 85 | 5.4 | 36 | 0.132 | 87 | ○ |
| 47 | TOL/ACE=3/1 | 49 | 6.9 | 35 | 0.174 | 66 | ○ |
| 48 | BA/CH=5/1 | 82 | 9.4 | 19 | 0.124 | 93 | ○ |
| 49 | MC/CH=5/1 | 114 | 6.9 | 35 | 0.184 | 62 | ○ |
| 50 | TOL/THF=9/1 | 93 | 4.0 | 36 | 0.190 | 60 | ○ |
| 51 | CH/BC=1/1 | 114 | 9.5 | 11 | 0.143 | 98 | ○ |
| 52 | CH/BC=1/2 | 130 | 9.0 | 25 | 0.199 | 58 | ○ |

- continued -

EP 0 362 411 A1

- continued -

| Ex. No. | Solvent | | | Properties of foam | | | |
|---|---|---|---|---|---|---|---|
| | Component (weight ratio) | Max. torque temp. (°C) | Max. torque (N·m) | Coef. of shrinkage after expansion(%) | Apparent density(g/cm$^3$) | Expansion ratio(times) | Degree of ashing |
| Comp. Ex. 11 | TOL only | 104 | 3.8 | 53 | 0.336 | 34 | ◯ |
| Comp. Ex. 12 | CH only | 44 | 39.0 | – | – | – | – |
| Comp. Ex. 13 | CH/MC=1/1 | 63 | 29.5 | – | – | – | – |
| Comp. Ex. 14 | XY only | 124 | 3.4 | 45 | 0.336 | 34 | ◯ |

(Note) In Comparative Examples 12 and 13, cells were broken because of little strength of cell membrane.

Comparative Examples 15 to 23

A foam was obtained in the same manner as that set forth in Examples 35 to 52 except that CPVC (average polymerization degree 2500, chlorine content 67 %) was used instead of PVC, and bis(di-n-butyltin monolaurate) maleate was used instead of dibasic lead stearate.

The apparent density, expansion ratio, coefficient of shrinkage after expansion and degree of ashing, as properties of the obtained foam, were determined in the same manner as in Examples 35 to 52. The results are shown in Table 10.

The maximum torque temperature and the maximum torque of the solvent herein are those observed when CPVC of which average polymerization degree is 2500 and chlorine content is 67 % is used instead of PVC of which average polymerization degree is 2400.

According to these results, the use of a specific solvent appropriate to the expansion of PVC tends to make it difficult to obtain a good foam and tends to reduce the expansion ratio. In addition, the phenomenon of ashing takes place, wherefore it is found that such a foam itself cannot be used as a quasi-noncombustive or noncombustive material.

Table 10

| Comp. Ex. No. | Solvent | | | Properties of foam | | | |
|---|---|---|---|---|---|---|---|
| | Component (weight ratio) | Max. torque temp. (°C) | Max. torque (N·m) | Coef. of shrinkage after expansion (%) | Apparent density($g/cm^3$) | Expansion ratio(times) | Degree of ashing |
| 15 | TOL only | 71 | 12.7 | (Severe breakage of cells) | – | – | – |
| 16 | TOL/CH=5/1 | 58 | 13.3 | (No foam obtained) | – | – | – |
| 17 | TOL/ACE=5/1 | 56 | 15.8 | 47 | 0.411 | 32 | ✕ |
| 18 | TOL/DIBK=5/1 | 50 | 15.7 | 40 | 0.392 | 33 | ✕ |
| 19 | TOL/MEK=5/1 | 59 | 15.2 | 38 | 0.195 | 67 | ✕ |
| 20 | TOL/CP=5/1 | 60 | 16.0 | 37 | 0.419 | 31 | ✕ |
| 21 | TOL/MIBK=5/1 | 65 | 13.9 | 42 | 0.199 | 66 | ✕ |
| 22 | TOL/MO=5/1 | 65 | 13.2 | 31 | 0.215 | 61 | ✕ |
| 23 | CH only | 61 | 14.8 | (Broken because of little strength of cell membrane) | – | – | – |

EP 0 362 411 A1

These results prove that the rigid foam of the present invention has a small coefficient of shrinkage after expansion and an expansion ratio of at least 50 times which is necessary to produce a quasi-noncombustive foam, and that this foam does not turn to ash on burning.

<u>Examples 53 to 55</u>

A foam was obtained in the same manner as that set forth in Examples 1 to 5 except that the raw materials shown in Table 11 were used.

The apparent density, expansion ratio and degree of ashing, as properties of the obtained foam, were determined in the same manner as in Examples 1 to 5. The substrate material test according to JIS A 1321 was carried out to determine the maximum temperature in an oven. The results are shown in Table 11.

Here, the fact that the maximum temperature in an oven is not more than 800°C means that the foam can be used as a noncombustive foam.

Table 11

| Ex. No. | | Components of composition (parts by weight) | | | | | | | |
|---|---|---|---|---|---|---|---|---|---|
| | | Inorg. substance | | | Solvent | | | Blowing agent | Stabilizer |
| | PVC | Rock wool | Al(OH)$_3$ | Talc | Kind | Max.torque temp.(°C) | Max. torque (N·m) | | |
| 53 | PSH-660 (100) | (2) | (800) | (100) | Toluene(458) Cyclohexanone(92) | 80 | 10.8 | AIBN (42.5) | SL (6) |
| 54 | PSH-660 (100) | (2) | (1000) | (50) | Toluene(458) Cyclohexanone(92) | 80 | 10.8 | AIBN (42.5) | SL (6) |
| 55 | PSH-660 (100) | (2) | (1100) | (50) | Toluene(458) Cyclohexanone(92) | 80 | 10.8 | AIBN (42.5) | SL (6) |

EP 0 362 411 A1

- continued -

| Ex. No. | Kneading temp. (°C) | Blowing temp. (°C) | Properties of foam | | | |
|---|---|---|---|---|---|---|
| | | | Apparent density $(g/cm^3)$ | Expansion ratio (times) | Max. temp. in oven (°C) | Degree of ashing |
| 53 | 91 | 32 | 0.128 | 115 | 805 | ◯ |
| 54 | 88 | 31 | 0.176 | 95 | 796 | ◯ |
| 55 | 88 | 30 | 0.190 | 96 | 795 | ◯ |

EP 0 362 411 A1

These results prove that the rigid foams obtained in Examples 54 and 55 have a noncombustive property and can be suitably used as a noncombustive building material and the like.

INDUSTRIAL APPLICABILITY

A rigid foam made of the foamable composition of the present invention is excellent in safety and health for the human body since it does not need asbestos, is small in amounts of generated heat, generated smoke, generated noxious gas and deformation on burning. In addition, it is excellent in dimensional stability when used at high temperatures, that is, thermal resistance, generates no harmful ashing which causes the collapse even on forced burning, and is inexpensive. Due to these advantages, it can be suitably used as a heat insulating material for constructions, and the like.

CLAIMS

1. A foamable composition comprising (A) a vinyl chloride resin, (B) an inorganic substance containing inorganic fibers of at least 1 μm diameter, (C) a solvent having properties such that when a mixture, which is composed of 100 parts by weight of a vinyl chloride resin of average polymerization degree of 2400, 100 parts by weight of said solvent, and 6 parts by weight of dibasic lead stearate is kneaded using a plastograph at 30 rpm while raising the temperature, the maximum torque on said kneader is 4 to 25 N·m and (D) a decomposition-type blowing agent.

2. The foamable composition of Claim 1, wherein the temperature at which said maximum torque is achieved is 40° to 150°C.

3. The foamable composition of Claim 1, wherein the average polymerization degree of said vinyl chloride resin is 1500 to 5000.

4. The foamable composition of Claim 1, wherein said inorganic fibers are rock wool.

5. The foamable composition of Claim 1, wherein said inorganic fibers are glass fiber.

6. The foamable composition of Claim 1, wherein said inorganic substance contains a metal hydroxide.

7. The foamable composition of Claim 6, wherein said metal hydroxide is aluminum hydroxide.

8. The foamable composition of Claim 7, wherein the amount of aluminum hydroxide is at least 80 parts by weight per 100 parts by weight of the vinyl chloride resin.

9. The foamable composition of Claim 7, wherein the amount of aluminum hydroxide is at least 900 parts by weight per 100 parts by weight of the vinyl chloride resin.

10. The foamable composition of Claim 1, wherein said inorganic substance contains a nucleating agent.

11. The foamable composition of Claim 10, wherein said nucleating agent is talc.

12. The foamable composition of Claim 1, wherein the amount of said inorganic fibers is 2 to 200 parts by weight per 100 parts by weight of the vinyl chloride resin.

13. The foamable composition of Claim 1, wherein the amount of said inorganic substance is 200 to 2000 parts by weight per 100 parts by weight of the vinyl chloride resin.

14. The foamable composition of Claim 1, wherein the amount of said solvent is 250 to 3000 parts by weight per 100 parts by weight of the vinyl chloride resin.

15. The foamable composition of Claim 1, wherein said decomposition-type blowing agent is one which generates nitrogen gas by thermal decomposition.

16. The foamable composition of Claim 1, wherein said decomposition-type blowing agent is dinitrosopentamethylenetetramine.

17. The foamable composition of Claim 16, wherein said composition contains a zinc-containing compound.

18. The foamable composition of Claim 17, wherein the amount of said zinc-containing compound is 5 to 95 parts by weight per 100 parts by weight of the vinyl chloride resin.

19. The foamable composition of Claim 1, wherein said composition contains a stabilizer.

20. A process for preparing a foamable composition comprising kneading (A) a vinyl chloride resin, (B) an inorganic substance containing inorganic fibers of at least 1 μm diameter, (C) a solvent, which when mixed in a mixture composed of 100 parts by weight of a vinyl chloride resin of average polymerization degree of 2400, 100 parts by weight of said solvent, and 6 parts by weight of dibasic lead stearate, and the mixture is kneaded using a plastograph at 30 rpm while raising the temperature, exhibits a miximum torque of 4 to 25 N·m, and (D) a decomposition-type blowing agent, at a temperature of at least that at which said vinyl chloride resin and said solvent become compatible with each other, and of at most the boiling point of said solvent.

21. A process for preparing a foamable composition comprising kneading (A) a vinyl chloride resin, (B) an inorganic substance containing inorganic fibers of at least 1 μm diameter, and (C) a solvent, which when mixed into a mixture composed of 100 parts by weight of a vinyl chloride resin of average polymerization degree of 2400, 100 parts by weight of said solvent, and 6 parts by weight of dibasic lead stearate , and the mixture is kneaded using a plastograph at 30 rpm while raising the temperature, exhibits a maximum torque on said kneading of 4 to 25 N·m, at a temperature of at least that at which said vinyl chloride resin and said solvent become compatible with each other and of at most the boiling point of said solvent; adding (D) a decomposition-type blowing agent to the mixture at a temperature of not higher than the decomposing temperature of the decomposition-type blowing agent; and further kneading the resulting mixture.

22. A rigid foamed article of expansion ratio of at least 50 times whish is prepared by expanding a foamable composition which is composed of (A) a vinyl chloride resin, (B) an inorganic substance containing inorganic fibers of at least 1 μm diameter, (C) a solvent, which when mixed in a mixture composed of 100 parts by weight of a vinyl chloride resin of average polymerization degree of 2400, 100 parts by weight of said solvent, and 6 parts by weight of dibasic lead stearate, and the mixture is kneaded using a plastograph at 30 rpm while raising the temperature, exhibits a maximum torque of 4 to 25 N·m, and (D) a decomposition-type blowing agent.

23. A process for preparing a rigid foamed article, comprising kneading (A) a vinyl chloride resin, (B) an inorganic substance containing inorganic fibers of at least 1 μm diameter, (C) a solvent, which when mixed in a mixture composed of 100 parts by weight of a vinyl chloride resin of average polymerization degree of 2400, 100 parts by weight of said solvent, and 6 parts by weight of dibasic lead stearate, and the mixture is kneaded using a plastograph at 30 rpm while raising the temperature, exhibits a miximum torque of 4 to 25 N·m, and (D) a decomposition-type blowing agent; introducing the resulting foamable composition into a closable mold; heating it under pressure to decompose the decomposition-type blowing agent; and then expanding the composition at the same time when opening the mold at an appropriate expansion temperature.

# INTERNATIONAL SEARCH REPORT

International Application No PCT/JP89/00362

## I. CLASSIFICATION OF SUBJECT MATTER (if several classification symbols apply, indicate all) 6

According to International Patent Classification (IPC) or to both National Classification and IPC

Int.Cl$^4$ C08J9/06, B29C39/00

## II. FIELDS SEARCHED

### Minimum Documentation Searched 7

| Classification System | Classification Symbols |
|---|---|
| IPC | C08J9/04-C08J9/10 |

### Documentation Searched other than Minimum Documentation to the Extent that such Documents are Included in the Fields Searched 8

| | |
|---|---|
| Jitsuyo Shinan Koho | 1972 - 1989 |
| Kokai Jitsuyo Shinan Koho | 1972 - 1989 |

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| A | JP, B2, 52-26776 (Fujimori Tokuzo) 15 July 1977 (15. 07. 77) Column 2, lines 25 to 28, column 2, lines 8 to 9 and column 1, line 35 to column 2, line 2 (Family: none) | 1, 4, 5, 6, 7, 10, 11 |
| A | JP, A, 59-215331 (Fuji Chemical Co., Ltd. and one other) 5 December 1984 (05. 12. 84) P.3, lower left column, line 18 to lower right column, line 1 (Family: none) | 1 |
| A | JP, A, 61-151073 (Uematsu Michio and one other) P.4, upper right column, lines 11 to 20 (Family: none) | 1 |
| A | Motoyama Toshihiko (author), Binran, Rubber · Plastic Haigo Yakuhin (revised edition) 15 October 1974 (15. 10. 74) Rubber Digest-sha P.258, P.327 and P.266-269 | 15, 16 17, 19 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| June 6, 1989 (06. 06. 89) | June 26, 1989 (26. 06. 89) |

| International Searching Authority | Signature of Authorized Officer |
|---|---|
| Japanese Patent Office | |

Form PCT/ISA/210 (second sheet) (January 1985)

| | FURTHER INFORMATION CONTINUED FROM THE SECOND SHEET | |
|---|---|---|
| P | JP, A, 63-264645 (Kanegafuchi Chemical Industry Co., Ltd.) 1 November 1988 (01. 11. 88) Claim & EP, A, 259611 | 1-23 |

**V.☐ OBSERVATIONS WHERE CERTAIN CLAIMS WERE FOUND. UNSEARCHABLE** [1]

This international search report has not been established in respect of certain claims under Article 17(2) (a) for the following reasons:

1.☐ Claim numbers ............., because they relate to subject matter not required to be searched by this Authority, namely:

2.☐ Claim numbers ............., because they relate to parts of the international application that do not comply with the prescribed requirements to such an extent that no meaningful international search can be carried out, specifically:

3.☐ Claim numbers ............., because they are dependent claims and are not drafted in accordance with the second and third sentences of PCT Rule 6.4(a).

**VI.☐ OBSERVATIONS WHERE UNITY OF INVENTION IS LACKING** [2]

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.

Form PCT/ISA/210 (supplemental sheet (2)) (January 1985)